# EUROPEAN PATENT APPLICATION

(11) **EP 3 534 234 A1**
(43) Date of publication of application: **04.09.2019**
(21) Application number: 16922760.0
(22) Date of filing: 02.12.2016
(51) Int. Cl.: G05D 1/02, G06T 7/00, G09B 29/10, G06F 8/65, G06F 16/29

(54) **LOCALIZATION METHOD AND DEVICE**

(71) Applicant: Cloudminds (Shenzhen) Robotics Systems Co., Ltd., Shenzhen, Guangdong 518000 (CN)
(72) Inventor: LIN, Yimin, Beijing 100102 (CN); LIAN, Shiguo, Beijing 100102 (CN)
(74) Representative: Iannone, Carlo Luigi
(86) International application number: PCT/CN2016/108392
(87) International publication number: WO 2018/098811

(57) **Abstract**

A positioning method and device are provided, which relate to the field of positioning and navigation and are used to solve the problem that a vSLAM fails to perform positioning and navigation due to the influence of an angle of view and illumination. The positioning method includes: creating a plurality of visual simultaneous localization and mapping (vSLAM) processes, and loading corresponding map databases for each of the vSLAM processes respectively; calling each of the vSLAM processes to perform positioning based on real-time images; and performing positioning according to positioning results obtained by each vSLAM process succeeding in positioning. The embodiments of the present invention are applied to the positioning or navigation of devices such as robots, automatic driving cars and the like.

## Description

### FIELD OF THE INVENTION

The present invention relates to the field of positioning and navigation, and more particularly, to a positioning method and device.

### BACKGROUND

vSLAM (visual simultaneous localization and mapping) has currently been widely used in robot navigation, which may assist robots in completing positioning and navigation tasks, however since vSLAM is based on image processing, it is susceptible to a change of illumination and angle of view. For example, the vSLAM composes a map of a scene at a moment during the day, and then it can not find a matching image between the vSLAM map collected at night and the map composed during the day due to the change of illumination for the same scene at night, and thus positioning and navigation cannot be achieved. In addition, the angle of view of composing the map is directional since the vSLAM is affected by the angle of view of a sensor when collecting images, and then if there is a large difference between the angle of view during positioning and the stored angle of view, the positioning and navigation cannot be completed similarly.

### SUMMARY OF THE INVENTION

According to an embodiment of the present invention, a positioning method and device are provided, so as to mainly solve the problem that the vSLAM fails to perform positioning and navigation due to the influence of an angle of view and illumination.

In order to achieve the above object, the following technical solutions are adoptd according to the embodiment of the present invention:
In a first aspect, a positioning method is provided, including:
   creating a plurality of visual simultaneous localization and mapping (vSLAM) processes, and loading corresponding map databases for each of the vSLAM processes respectively;
   calling each of the vSLAM processes to perform positioning based on real-time images; and
   performing positioning according to positioning results obtained by each vSLAM process succeeding in positioning .
In a second aspect, a positioning device is provided, including:
   a creation unit, configured to create a plurality of visual simultaneous localization and mapping (vSLAM) processes, and to load corresponding map databases for each of the vSLAM processes respectively;
   a positioning unit, configured to call each of the vSLAM processes to perform positioning based on real-time images;
   wherein the positioning unit is further configured to perform positioning according to positioning results obtained by each vSLAM process succeeding in positioning.
In a third aspect, a computer storage medium is provided, for storing a computer software instruction used by a positioning device and including a program code designed to execute the positioning method in the first aspect.
In a fourth aspect, a computer program product is provided, which is capable of being directly loaded in an internal memory of a computer and contains a software code, wherein the computer program can be loaded and executed by the computer to implement the positioning method in the first aspect.
In a fifth aspect, an electronic equipment is provided, including a memory, a communication interface and a processor, wherein the memory is configured to store computer executable codes, the processor is configured to execute the computer executable codes to control the execution of the positioning method in the first aspect, and the communication interface is configured to perform data transmission between the positioning equipment and an external equipment.

According to the positioning method and device provided by the embodiments of the present invention, by matching map databases corresponding to different shooting time periods or shooting angle of views with the real-time images and then performing positioning based on the matching result, the problem that the vSLAM fails to perform positioning and navigation due to the influence of the angle of view and illumination is solved.

### BRIEF DESCRIPTION OF THE DRAWINGS

To illustrate the technical solutions in the embodiments of the present invention or the prior art more clearly, a brief introduction on the drawings which are needed in the description of the embodiments or the prior art is given below. Obviously, the drawings in the description below are merely some of the embodiments of the present invention, based on which other drawings may be obtained by those of ordinary skills in the art without any creative effort.
Fig.1 is a schematic diagram of an angle of view according to an embodiment of the present invention;
Fig.2 is a schematic diagram of positioning according to an embodiment of the present invention;
Fig.3 is a schematic flow diagram of a positioning method according to an embodiment of the present invention;
Fig.4 is a schematic flow diagram of another positioning method according to an embodiment of the present invention;
Fig.5 is a structural schematic diagram of a positioning device according to an embodiment of the present invention;
Fig.6 is a structural schematic diagram of another positioning device according to an embodiment of the present invention; and
Fig.7 is a structural schematic diagram of yet another positioning device according to an embodiment of the present invention.

### DETAILED DESCRIPTION

A clear and complete description of the technical solutions in the embodiments of the present invention will be given below in combination with the drawings in the embodiments of the present invention. Obviously, the embodiments described below are merely a part, but not all, of the embodiments of the present invention. All of other embodiments, obtained by those of ordinary skills in the art based on the embodiments of the present invention without any creative effort, fall into the protection scope of the present invention.

The positioning method and device provided by the embodiments of the present invention may be used for indoor and outdoor visual positioning and navigation by apparatuses such as robots, automatic driving cars and the like. The positioning device may be located in the cloud to serve as a positioning server or located at the scene to serve as a terminal (e.g., a blind guide helmet).

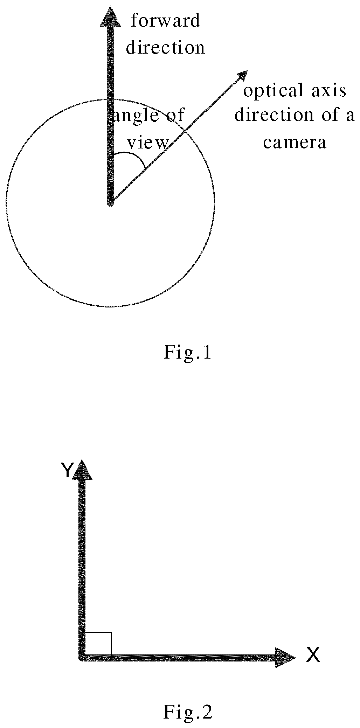

Referring to Fig.1, the angle of view described in the embodiment of the present invention refers to an angle between an optical axis direction of a camera and a forward direction. Referring to Fig.2, the positioning described in the embodiment of the present invention refers to determining the location (x, y) in an X-Y plane of a rectangular coordinate system.

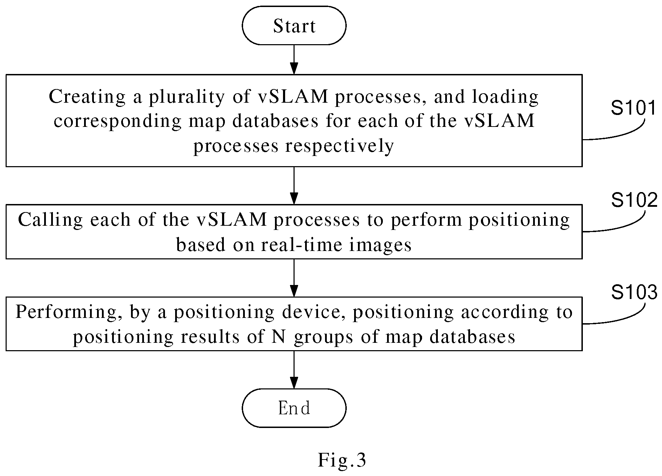

The embodiment of the present invention provides a positioning method applied to the above positioning device, as shown in Fig.3, the method comprises:
S101. creating a plurality of vSLAM processes, and loading corresponding map databases for each of the vSLAM processes respectively.

The map databases are map databases that are collected in advance for the same route at different time periods and different angle of views. Specifically, after a starting place, a destination and a travel route are determined, a photographing vehicle keeps the angle of view of a visual sensor module unchanged, travels from the starting place to the destination along the travel route, and shoots an image at intervals of a certain time during the travel process and records location coordinates (relative location or absolute location) at the same time, and a group of map databases for the travel route is formed after arriving at the destination, wherein each of the map databases includes an image and a angle of view, a time and a location coordinate while shooting the image.

In order to balance the calculation amount and the matching accuracy, the map databases may be collected at an interval of one hour during 0-23 o'clock as shown in Table 1, so that the map databases under different illumination conditions may be obtained; in addition, the map databases may be collected at an interval of 45 degrees in 360 degrees of angle of views as shown in Table 1. Further preferably, a 360-degree panorama camera may be directly used for shooting to obtain the map databases as shown in Table 2, wherein each of the map databases includes a 360-degree panoramic image, thereby not only saving the shooting workload but also saving the calculation amount during the positioning.

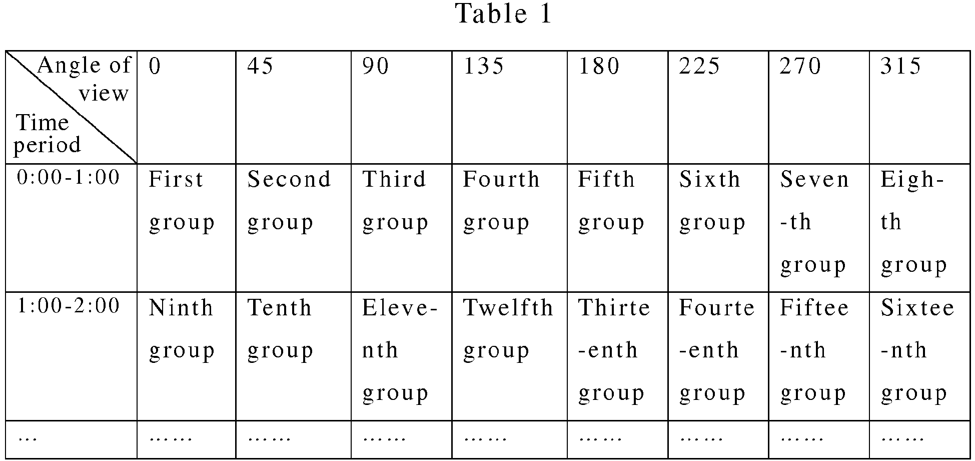

**Table 2**

| | | | | | | |
|---|---|---|---|---|---|---|
| Time period | 0:00-1:00 | 1:00-2:00 | 2:00-3:00 | 3:00-4:00 | ...... | 23:00-0:00 |
| | First group | Second group | Third group | Fourth group | ...... | Twelfth group |

The number of the created vSLAM processes may be less than or equal to the number of groups of the map databases. For example, if there are 16 groups of map databases, 1 to16 processes may be created to perform the above matching operation, wherein each of the processes takes a group of map databases to perform positioning of the real-time images, and a group of map databases is extracted from the remaining several groups of map databases to again perform positioning of the real-time images if one of the progresses completes the positioning, until all N groups of map databases are loaded.

Each of the vSLAM processes may use the same positioning rule to perform positioning for different map databases, or may use different positioning rules to perform positioning for the same map database.

In some embodiments, a plurality of vSLAM processes may be created during initialization, and in case of positioning failure of one vSLAM process, the vSLAM process is closed to save computing resources; and if each of the created vSLAM processes is closed, a plurality of vSLAM processes are recreated.

S102. calling each of the vSLAM processes to perform positioning based on real-time images.

Specifically, the real-time image of a current frame may be collected by a visual sensor module (e.g., a camera).

In case that each of the processes obtains the positioning result from the loaded map database based on the real-time image, in order to further simplify the operation, it is not necessary to match all pixel points one by one. Instead, image features may be extracted from the loaded map database and the real-time image respectively, and then the image features of the loaded map database and the image features of the real-time image are matched, so that the calculation amount may be greatly reduced. Further, since the map databases are kept unchanged, the map databases may be stored as the image features in advance, so that only the image features of the real-time images are extracted during every positioning, thereby further reducing the calculation amount.

In some embodiments, if one vSLAM process succeeds in positioning, then this process may notify other vSLAM processes that do not succeed in positioning to narrow their search ranges in corresponding map databases, such that the narrowed search ranges include the location indicated by the positioning result output by the vSLAM process succeeding in positioning. For example, assuming that the first process processes the first group of map databases, the second process processes the second group of map databases, and the first process firstly searches that the hundredth map database of the first group of map databases is successfully positioned during the positioning process, then the first process notifies the second process (which has not succeeded in positioning) that it is most likely to succeed in positioning in the vicinity of the hundredth map database of the second group of map databases, for example, the first process may instructe the second process to directly skip the first 89 map databases in the second group of map databases and to start searching from the 90th map database to achieve the purpose of reducing the calculation workload.

In some embodiments, in the case of positioning failure of each vSLAM process, it indicates that the present group of map databases loaded by this process may not be able to position the real-time images due to illumination, angle of view, shooting interval and the like, then the present group of map databases will not participate in the positioning process of subsequent real-time images, so the vSLAM process is closed, and then a plurality of vSLAM processes are recreated according to step S101 until all vSLAM processes are closed, so that the real-time images of the next shooting interval may be successfully positioned with the map databases so as to achieve the purpose of further reducing the calculation workload. Specifically, whether each group of map databases participates in the positioning process of subsequent real-time images may be indicated by setting a flag bit for each group of map databases.

S103. performing, by a positioning device, positioning according to positioning results of N groups of map databases.

Specifically, the coordinate values of the locations indicated by the positioning results obtained by each vSLAM process succeeding in positioning may be averaged as the positioning result of the current real-time image. Then, according to the location coordinates of the positioning, a navigation direction is given in combination with a path planning result.

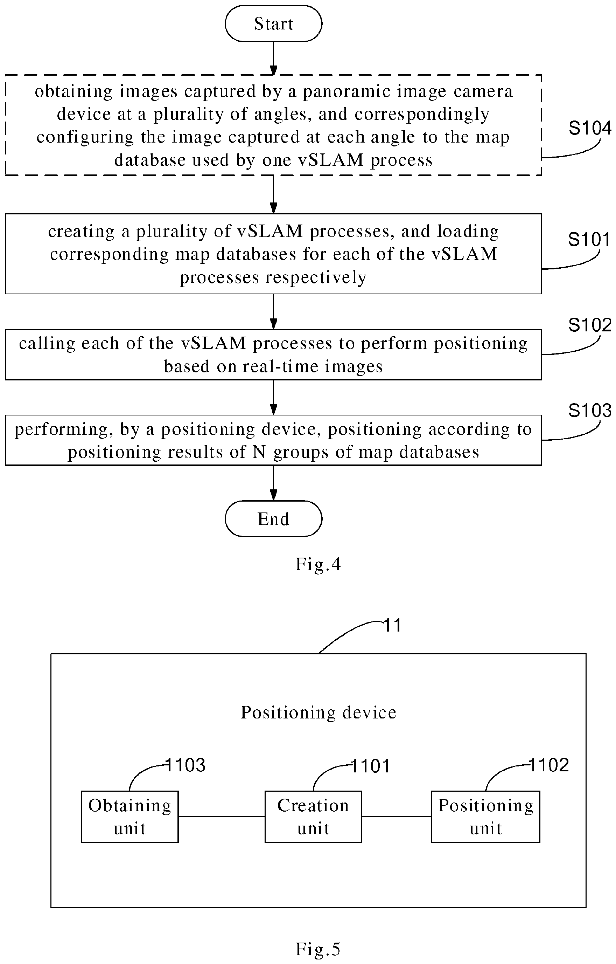

Optionally, referring to fig.4, before step S101, the method may further include:
S104. obtaining images captured by a panoramic image camera device at a plurality of angles, and correspondingly configuring the image captured at each angle to the map database used by one vSLAM process.

Each map database may contain a 360-degree panoramic image, thereby not only reducing the shooting workload, but also reducing the calculation amount during the positioning.

According to the positioning method provided by the embodiment of the present invention, by matching the map databases corresponding to different shooting time periods or different shooting angle of views with the real-time images, and performing positioning according to the positioning results, the problem that the vSLAM fails to perform positioning and navigation due to the angle of view and illumination is solved.

Those skilled in the art will readily appreciate that the present invention may be implemented by hardware or a combination of hardware and computer software in combination with the units and algorithm steps of the various examples described in the embodiments disclosed herein. Whether a certain function is implemented in the form of hardware or in the manner of driving the hardware via the computer software is depended on specific applications and design constraint conditions of the technical solutions. Those skilled in the art may implement the described functions by using different methods for each specific application, but this implementation should not be considered beyond the scope of the present invention.

The embodiment of the present invention may divide the function modules of the positioning device according to the above method example, for example, the function modules may be divided according to the functions, and two or more functions may also be integrated into one processing module. The above integrated module may be implemented in the form of hardware and may also be implemented in the form of a software function module. It should be noted that the division of the modules in the embodiment of the present invention is schematic and is only a logical function division, and other division manners may be provided during the actual implementation.

In the case that the function modules are divided according to the functions, fig.5 shows a possible structural schematic diagram of the positioning device involved in the above embodiment, the positioning device 11 includes: a creation unit 1101, a positioning unit 1102 and an obtaining unit 1103. The creation unit 1101 is configured to support the positioning device to execute the process S101 in fig.3 and the process S101 in fig.4; the positioning unit 1102 is configured to support the positioning device to execute the processes S102 and S103 in fig.3 and the processes S102 and S103 in fig.4; and the obtaining unit 1103 is configured to support the positioning device to execute the process S104 in fig.4. All the related contents of the steps involved in the foregoing method embodiment may be quoted to the function descriptions of the corresponding function modules, and thus details are not described herein again.

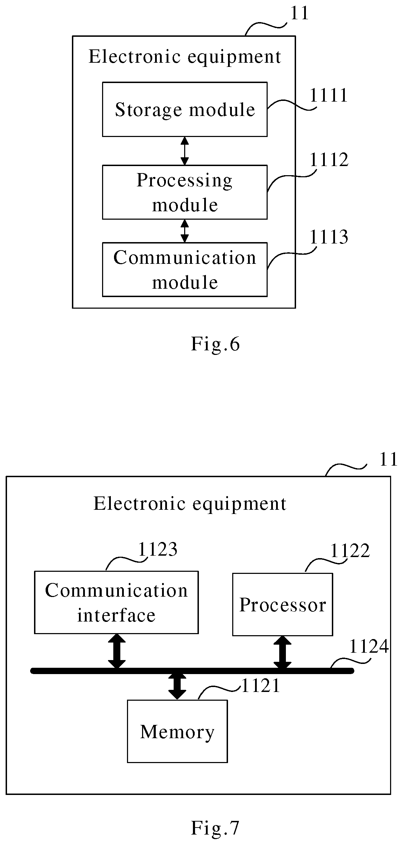

In the case that the integrated unit is adopted, fig.6 shows a possible structural schematic diagram of the electronic equipment involved in the above embodiment. The electronic equipment 11 includes a processing module 1112 and a communication module 1113. The processing module 1112 is configured to perform control and management on the actions of the positioning device, for example, the processing module 1112 is configured to support the positioning device to execute the processes S101-S103 in fig.3 and the processes S101-S104 in fig.4, and/or, is configured to execute other processes of the technology described herein, and the communication module 1113 is configured to support the communication between the electronic equipment 11 and other external entities. The electronic equipment 11 may further include a storage module 1111, configured to store program codes and data of the positioning device.

The processing module 1112 may be a processor or a controller, for example, may be a central processing unit (CPU), a general purpose processor, a digital signal processor (DSP), an application-specific integrated circuit (ASIC), a field programmable gate array (FPGA) or other programmable logic devices, transistor logic devices, hardware components or any combinations thereof. The processing module may implement or execute various example logic blocks, modules and circuits described in combination with the contents disclosed by the present invention. The processor may also be a combination for implementing a computing function, for example, it may include one or more microprocessor combinations, a combination of a DSP and a microprocessor, and the like. The storage module 1111 may be a memory.

In case that the processing module 1112 is a processor, the communication module 1113 is a communication interface, and the storage module 1111 is a memory, the positioning device involved in the embodiments of the present invention may be the positioning device as shown in fig.7.

Referring to fig.7, the electronic equipment 11 includes a processor 1122, a communication interface 1123, a memory 1121 and a bus 1124. The processor 1122, the communication interface 1123 and the memory 1121 are connected to each other through the bus 1124; the bus 1124 may be a peripheral component interconnect (PCI) bus or an extended industry standard architecture (EISA) bus or the like. The bus may be divided into an address bus, a data bus, a control bus and the like. For ease of representation, the bus is only expressed by a thick line in fig.7, but it does not mean that there is only one bus or one type of bus.

During specific implementation, the electronic equipment herein may be a consumer electronic equipment, or may be a server that provides a corresponding function, etc.

The steps of the method or algorithm described in combination with the contents disclosed by the present invention may be implemented in the form of hardware and may also be implemented by a processor executing software instructions. The embodiment of the present invention further provides a storage medium, wherein the storage medium may include a memory 1121, configured to store a computer software instruction used by the positioning device, and the computer software instruction includes program codes designed to execute the positioning method. Specifically, the software instruction may be composed of corresponding software modules, and the software modules may be stored in a random access memory (RAM), a flash memory, a read only memory (ROM), an erasable programmable ROM (EPROM), an electrically EPROM (EEPROM), a register, a hard disk, a mobile hard disk, a CD-ROM or any other form of storage medium known in the art. An exemplary storage medium is coupled to the processor, so that the processor may read information from and write information to the storage medium. Of course, the storage medium may also be a constituent part of the processor. The processor and the storage medium may be located in an ASIC. Additionally, the ASIC may be located in the positioning device. Of course, the processor and the storage medium may also exist as discrete components in the positioning device.

The embodiment of the present invention further provides a computer program, the computer program may be directly loaded into the memory 1121 and contains software codes, and the computer program can implement the above human-computer hybrid decision method after being loaded and executed by a computer.

The foregoing descriptions are merely specific embodiments of the present invention, but the protection scope of the present invention is not limited thereto. Any skilled one familiar with this art could readily conceive of variations or substitutions within the disclosed technical scope of the present invention, and these variations or substitutions shall fall within the protection scope of the present invention. Accordingly, the protection scope of the present invention should be subject to the protection scope of the claims.

## Claims

1. A positioning method, **characterized in that** comprising:
creating a plurality of visual simultaneous localization and mapping (vSLAM) processes, and loading corresponding map databases for each of the vSLAM processes respectively;
calling each of the vSLAM processes to perform positioning based on real-time images; and
performing positioning according to positioning results obtained by each vSLAM process succeeding in positioning.

2. The method according to claim 1, **characterized in that** the step of creating a plurality of visual simultaneous localization and mapping (vSLAM) processes comprises:
creating a plurality of vSLAM processes that adopt different positioning rules.

3. The method according to claim 1 or 2, **characterized in that** the method further comprises:
in case that one of the vSLAM processes succeeds in positioning, narrowing search ranges of other vSLAM processes in corresponding map databases, wherein the narrowed search ranges include a location indicated by the positioning result output by the vSLAM process succeeding in positioning.

4. The method according to any one of claims 1-3, **characterized in that**,
the step of creating a plurality of visual simultaneous localization and mapping (vSLAM) processes comprises: creating a plurality of vSLAM processes during initialization; and after each of the created vSLAM processes is closed, creating a plurality of vSLAM processes;
the method further comprises: in case of positioning failure of each vSLAM process, closing the vSLAM process.

5. The method according to any one of claims 1-4, **characterized in that** the step of performing positioning according to positioning results obtained by each vSLAM process succeeding in positioning comprises:
using an average value of coordinate values of the locations indicated by the positioning results obtained by each vSLAM process succeeding in positioning as a current positioning result.

6. The method according to any one of claims 1-5, **characterized in that** further comprising:
obtaining images captured by a panoramic image camera device at a plurality of angles; and
correspondingly configuring the image captured at each angle to the map database used by one vSLAM process.

7. A positioning device, **characterized in that** comprising:
a creation unit, configured to create a plurality of visual simultaneous localization and mapping (vSLAM) processes, and to load corresponding map databases for each of the vSLAM processes respectively;
a positioning unit, configured to call each of the vSLAM processes to perform positioning based on real-time images;
wherein the positioning unit is further configured to perform positioning according to positioning results obtained by each vSLAM process succeeding in positioning.

8. The device according to claim 7, **characterized in that** the creation unit is specifically configured to:
creat a plurality of different types of vSLAM processes that adopt different positioning rules.

9. The device according to claim 7 or 8, **characterized in that** the positioning unit is further configured to:
in case that one of the vSLAM processes succeeds in positioning, narrow search ranges of other vSLAM processes in corresponding map databases, wherein the narrowed search ranges include a location indicated by the positioning result output by the vSLAM process succeeding in positioning.

10. The device according to any one of claims 7-9, **characterized in that**,
the creation unit is specifically configured to, create a plurality of vSLAM processes during initialization; and after each of the created vSLAM processes is closed, to create a plurality of vSLAM processes; and
the positioning unit is further configured to, in case of positioning failure of each vSLAM process, close the vSLAM process.

11. The device according to any one of claims 7-10, **characterized in that** the positioning unit is specifically configured to:
use an average value of coordinate values of the locations indicated by the positioning results obtained by each vSLAM processes succeeding in positioning as a current positioning result.

12. The device according to any one of claims 7-11, **characterized in that** further comprising:
an obtaining unit, configured to obtain images captured by a panoramic image camera device at a plurality of angles; and to correspondingly configure the image captured at each angle to the map database used by one vSLAM process.

13. A computer storage medium, **characterized in that** the computer storage medium is configured to store a computer software instruction used by a positioning device, wherein the computer software instruction comprises program codes designed for executing the positioning method according to any one of claims 1-6.

14. A computer program product, **characterized in that** the computer program product is capable of being directly loaded in an internal memory of a computer and containing software codes, wherein the computer program can implement the positioning method according to any one of claims 1-6 after being loaded and executed by the computer.

15. An electronic equipment, **characterized in that** comprising a memory, a communication interface and a processor, wherein the memory is configured to store computer executable codes, and the processor is configured to execute the computer executable codes to control the execution of the positioning method according to any one of claims 1-6, and the communication interface is configured to perform data transmission between the positioning equipment and an external equipment.
